# EUROPÄISCHE PATENTANMELDUNG

(11) **EP 4 760 074 A1**
(43) Veröffentlichungstag der Anmeldung: **17.06.2026**
(21) Anmeldenummer: 25219480.8
(22) Anmeldetag: 28.11.2025
(51) Int. Cl.: F01P 11/02, B60K 11/02

(54) **BEHÄLTER UND MODUL FÜR EINEN TEMPERIERMITTELKREISLAUF**

(30) Priorität: 12.12.2024 DE 102024137453
(71) Anmelder: TI Fluid Systems Engineering GmbH, 76437 Rastatt (DE)
(72) Erfinder: Kizilay, Irfan, 68799 Reilingen (DE); Lindow, Manuel, 76593 Gernsbach (DE); Leipold, Stefan, 67470 Seltz (FR); Schwab, Stefan, 76327 Pfinztal (DE); Deibel, Florian, 76547 Sinzheim (DE)
(74) Vertreter: Andrejewski - Honke Patent- und Rechtsanwälte Partnerschaft mbB

(57) **Zusammenfassung**

Ein Behälter (1) für ein Modul (2) eines Temperiermittelkreislaufs weist eine Behälterwand (3) auf. Die Behälterwand (3) schließt ein mit dem Temperiermittel befüllbares Behälterlumen (4) ein. Der Behälter (1) weist ein Innenelement (5) auf, wobei das Innenelement (5) von der Behälterwand (3) wenigstens teilweise umschlossen wird bzw. in den Behälterlumen (4) angeordnet ist. Ein Modul (2) für einen Temperiermittelkreislauf umfasst einen bzw. den Behälter (1) und einen Träger (10). Der Behälter (1) weist eine Behälterwand (3) auf, wobei die Behälterwand (3) ein mit dem Temperiermittel befüllbares Behälterlumen (4) einschließt. Der Träger (10) weist wenigstens einen Kanal (11) und wenigstens eine Aufnahme (12) zur Anordnung wenigstens einer Fluidkomponente (17, 25) auf. Der Träger (10) umfasst ein Mittelteil (13), ein erstes Seitenteil (14) und ein zweites Seitenteil (15). Der Behälter (1) weist das Mittelteil (13), das erste Seitenteil (14) und/oder das zweite Seitenteil (15) auf.

## Beschreibung

Die Erfindung betrifft einen Behälter für ein Modul eines Temperiermittelkreislaufs, wobei der Behälter eine Behälterwand aufweist, wobei die Behälterwand ein mit dem Temperiermittel befüllbares Behälterlumen einschließt. Die Erfindung betrifft ein Modul für einen Temperiermittelkreislauf, wobei das Modul einen bzw. den Behälter und einen Träger umfasst, wobei der Behälter eine Behälterwand aufweist, wobei die Behälterwand ein mit dem Temperiermittel befüllbares Behälterlumen einschließt, wobei der Träger wenigstens einen Kanal und vorzugsweise mehrere Kanäle aufweist, wobei der Träger wenigstens eine Aufnahme zur Anordnung von Fluidkomponenten umfasst, wobei der Träger ein Mittelteil, ein erstes Seitenteil und ein zweites Seitenteil aufweist. Die Erfindung betrifft ferner eine Baugruppe umfassend das Modul und eine Verwendung des Behälters, bzw. des Moduls bzw. der Baugruppe für einen Fluidkreislauf eines Fahrzeugs.

Derartige, gattungsgemäße Module für einen Temperiermittelkreislauf mit einem Behälter und einem Träger sind beispielsweise aus EP 4 279 300 A1 bekannt und dienen vornehmlich der Temperierung von Antriebsbatterien von Elektrofahrzeugen. Der Träger des bekannten Moduls umfasst eine Mehrzahl an mehr oder weniger parallel verlaufenden Kanälen, welche die verschiedenen Fluidkomponenten (Pumpen, Wärmetauscher, Ventile) des Moduls bzw. des gesamten Temperiersystems (z.B. Fluidleitungen an der Antriebsbatterie und damit außerhalb des Moduls) miteinander verbinden. Die Fluidkomponenten des Moduls sind an Aufnahmen des Trägers befestigt und werden von diesem getragen. Ebenso ist der Behälter mechanisch und fluidisch mit dem Träger verbunden, so dass der Behälter das restliche Modul und das gesamte Temperiersystem mit Temperiermittel versorgt. Das Modul ist das Ergebnis der Konzentration von Fluidkomponenten, so dass Leitungswege und Bauraum eingespart werden und Wartungs- sowie Reparaturarbeiten sich etwas einfacher gestalten.

Aus der Praxis sind Module bekannt, die einen Behälter mit einer Einfüllöffnung und mit einem Überlaufrohr aufweisen. Das Überlaufrohr mündet mit einem ersten Ende in einen oberen Abschnitt der Behälterwand und ist mit einem zweiten Ende an ein anderes Element des Moduls bzw. des Temperiermittelkreislaufs angeschlossen. Überschüssiges Temperiermittel im Temperiermittelkreislauf, beispielsweise aufgrund einer Wärmeausdehnung des Temperiermittels oder einer Parksituation des Fahrzeugs, kann mit Hilfe des Überlaufrohrs von dem anderen Element in den Behälter zurückgeführt werden, wodurch insbesondere Überdrucksituationen vermieden werden. Unterdrucksituationen werden hingegen durch den Behälter vermieden, weil dieser ein Reservoir an Temperiermittel zur Verfügung stellt. Hierdurch kann bei Bedarf eine Kompensationsmenge an Temperiermittel in das Temperiersystem bzw. in den Fluidkreislauf eingespeist werden, so dass der Behälter als Ausgleichsbehälter bzw. Puffer fungiert.

Generell sind die aus der Praxis und dem Schrifttum bekannten Behälter bzw. Module aufwendig in der Herstellung (Formprozesse und Montage). Der Erfindung liegt daher die Aufgabe zugrunde, den Aufwand bei der Herstellung zu verringern.

Diese Aufgabe wird gelöst durch einen Behälter für ein Modul eines Temperiermittelkreislaufs, wobei der Behälter eine Behälterwand aufweist, wobei die Behälterwand ein mit dem Temperiermittel befüllbares Behälterlumen einschließt, dadurch gekennzeichnet, dass der Behälter ein Innenelement aufweist, wobei das Innenelement von der Behälterwand wenigstens teilweise umschlossen wird bzw. in dem Behälterlumen angeordnet ist.

Der Erfindung liegt zunächst die Erkenntnis zugrunde, dass Innenelemente den Aufwand von der Montage mehr in Richtung Formprozess verlagern. Die Montage erfordert häufig komplexe Bewegungsabläufe, so dass eine Automatisierung entsprechend arbeitsintensiv und kostspielig ist.

Es wurde gefunden, dass die erhöhte Komplexität der Behälter- bzw. Modulstrukturen zwar auch einen größeren Aufwand beim Formprozess verursacht. Ganz besonders liegt dabei der Erfindung die Erkenntnis zugrunde, dass der durch das Innenelement eingesparte Aufwand bei der Montage größer ist als der beim Formprozess zusätzlich anfallende Aufwand durch das Innenelement. Im Ergebnis wurde die eingangs genannte Aufgabe gelöst.

Es ist bevorzugt, dass kein externes Rohr bzw. kein externer Schlauch von einem Element des Moduls bzw. der Baugruppe bzw. des Temperiermittelkreislaufs in einen oberen Bereich des Behälters führt. Der Behälter ist vorzugsweise so ausgebildet, dass das Innenelement bzw. eine Außenseite des Innenelements in Kontakt mit dem Temperiermittel gebracht bzw. bringbar ist. Es ist möglich, dass wenigstens ein Abschnitt einer Innenseite des Innenelements in Kontakt mit dem Temperiermittel gebracht bzw. bringbar ist. Es ist bevorzugt, dass das Innenelement aus dem Behälter herausragt. Es ist sehr vorteilhaft, dass das Innenelement Bestandteil eines/des Mittelteils ist. Mit Vorteil ist das Innenelement einstückig mit einem Abschnitt des Mittelteils eines/des Trägers verbunden und vorzugsweise integraler Bestandteil des Mittelteils.

Der Begriff "oben" bezieht sich vorzugsweise auf die vorgesehene Anordnung des Behälters in einem Fahrzeug. Es ist sehr bevorzugt, dass der Behälter einen Behälterdeckel bzw. eine Einfüllöffnung aufweist. Es ist sehr bevorzugt, dass der Behälterdeckel bzw. die Einfüllöffnung ein oberes Ende des Behälters definiert/definieren. Es ist bevorzugt, dass der Behälter einen Behälterboden umfasst. Der Behälterboden ist vorzugsweise hinsichtlich des Behälterdeckels bzw. der Einfüllöffnung gegenüberliegend angeordnet. Der Behälterboden umfasst einen Bereich des Behälters mit der größten Aufenthaltswahrscheinlichkeit des Temperiermittels.

Gemäß einer sehr bevorzugten Ausführungsform umfasst das Innenelement ein Rohr, wobei das Rohr vorzugsweise ein freies Ende aufweist. Dies erlaubt eine Rückführung von Temperiermittel von dem Temperiermittelkreislauf zurück in den Behälter. Es ist von Vorteil, dass das freie Ende des Rohrs in die zwei oberen Drittel bzw. in die obere Hälfte bzw. in das obere Drittel des Behälterlumens mündet. Es ist sehr bevorzugt, dass das Rohr ein angeschlossenes Ende umfasst. Das angeschlossene Ende des Rohres ist vorzugsweise das untere Ende des Rohres. Das angeschlossene Ende des Rohres ist mit Vorteil an die Behälterwand angeschlossen. Es ist sehr bevorzugt, dass das Rohr bzw. das angeschlossene Ende des Rohres an den Behälterboden angeschlossen ist und vorzugsweise durch den Behälterboden hindurchführt. Mit Vorteil ist das Rohr als Überlaufrohr ausgebildet. Das Rohr des Innenelements bewirkt, dass externe Rohre zur Zurückführung von Temperiermittel in den Behälter nicht mehr erforderlich sind. Externe Rohre benötigen separate Anschlüsse, welche Verbinder mit großen Toleranzanforderungen zwecks Dichtheit bedingen. Diese großen Toleranzanforderungen der Verbinder und die externe Montage verursachen einen großen Herstellungsaufwand, der durch das Rohr des Innenelements vermieden wird. Das Rohr des Innenelements ermöglicht einen Rücklauf des Temperiermittels aus dem Modul bzw. aus dem Temperiermittelkreislauf zurück in den Behälter. Dies kann bei bestimmten Parksituationen oder bei Überdruck aufgrund einer Temperaturerhöhung des Temperiermittels geschehen.

Es ist sehr bevorzugt, dass das Innenelement so ausgebildet ist, dass das freie Ende des Rohrs abgestützt wird. Es ist besonders bevorzugt, dass das Rohr zusätzlich zur Behälterwand bzw. zum Behälterboden an wenigstens einer weiteren Stelle - insbesondere an einer/der Trennwand - abgestützt wird. Dies bewirkt eine größere Stabilität des Rohrs, da das freie Ende sonst sehr den Bewegungen des Temperiermittels im Behälter ausgesetzt wäre.

Vorzugsweise umfasst das Innenelement bzw. der Behälter wenigstens eine Trennwand, wobei die Trennwand das Behälterlumen in wenigstens zwei Behälterkammern unterteilt, wobei die Behälterkammern vorzugsweise fluidisch miteinander verbunden sind. Dies bewirkt eine Verringerung der Bewegung des Temperiermittels in dem Behälter, sodass insbesondere ein Schwappen des Temperiermittels vermindert wird. Es ist bevorzugt, dass das Innenelement wenigstens 2 bzw. 3 bzw. 4 Trennwände umfasst. Mit Vorteil umfasst der Behälter wenigstens 4 bzw. 6 bzw. 8 bzw. 12 Behälterkammern.

Es ist besonders bevorzugt, dass die wenigstens eine Trennwand bzw. die Trennwände mit dem Rohr - vorzugsweise einstückig und insbesondere integral - verbunden ist/sind. Es ist bevorzugt, dass wenigstens zwei der Trennwände miteinander einstückig bzw. integral verbunden sind. Es ist bevorzugt, dass die wenigstens eine Trennwand mit einem/dem Mittelteil bzw. Träger einstückig bzw. integral verbunden sind. Es ist von besonderem Vorteil, wenn das Innenelement bzw. wenigstens eine Trennwand an wenigstens einem und insbesondere wenigstens zwei Punkten in Höhenrichtung zwischen dem Behälterboden und dem Behälterdeckel bzw. der Einfüllöffnung an der Behälterwand abgestützt ist/sind bzw. mit der Behälterwand verbunden ist/sind.

Es ist bevorzugt, dass der Behälter einen Einfüllstutzen umfasst. Der Einfüllstutzen ragt vorzugsweise wenigstens abschnittsweise in das Behälterlumen hinein. Der Einfüllstutzen ermöglicht ein besonders tropfsicheres Befüllen des Behälters. Es ist von Vorteil, dass ein Abschnitt des Einfüllstutzens aus dem von der Behälterwand definierten Behälterlumen herausragt. Zweckmäßigerweise umfasst der Einfüllstutzen ein Befestigungsmittel und insbesondere ein Gewinde zur Befestigung eines/des Behälterdeckels. Es ist bevorzugt, dass der Einfüllstutzen die Einfüllöffnung definiert. Mit Vorteil umfasst die Behälterwand eine Aussparung zum Einsetzen des Einfüllstutzens. Es ist möglich, dass der Einfüllstutzen mit dem Rohr und/oder der wenigstens einen Trennwand - vorzugsweise einstückig und insbesondere integral - verbunden ist.

Es ist bevorzugt, dass das Innenelement eine Halterung für einen Füllstandssensor umfasst. Mit Vorteil ist die Halterung für den Füllstandssensor mit dem Rohr bzw. wenigstens einer der Trennwände bzw. mit einem/dem Mittelteil bzw. einem/dem Träger - vorzugsweise einstückig und insbesondere integral - verbunden. Es ist bevorzugt, dass die Halterung für den Füllstandssensor an die Behälterwand angeschlossen ist und insbesondere durch die Behälterwand hindurch ragt.

Die eingangs genannte Aufgabe wird gelöst durch ein Modul für einen Temperiermittelkreislauf, wobei das Modul einen Behälter - insbesondere einen erfindungsgemäßen Behälter - und einen Träger umfasst, wobei der Behälter eine Behälterwand aufweist, wobei die Behälterwand ein mit dem Temperiermittel befüllbares Behälterlumen einschließt, wobei der Träger wenigstens einen Kanal und vorzugsweise mehrere Kanäle aufweist, wobei der Träger wenigstens eine Aufnahme zur Anordnung wenigstens einer Fluidkomponente umfasst, wobei der Träger ein Mittelteil, ein erstes Seitenteil und ein zweites Seitenteil aufweist, dadurch gekennzeichnet, dass der Behälter das Mittelteil, das erste Seitenteil und/oder das zweite Seitenteil umfasst.

Der Erfindung liegt zunächst die Erkenntnis zugrunde, dass die drei Teile des Trägers zu einer größeren Strukturflexibilität führen. Denn durch drei Teile (Mittelteil, erstes Seitenteil, zweites Seitenteil) können auf beiden Seiten des Trägers jeweils Kanäle bereitgestellt werden, die mit Hilfe von Durchbrüchen im Mittelteil auch miteinander verbunden sein können. Hierdurch kann der Träger bzw. das Modul insgesamt kompakter ausgebildet werden, was mit Blick auf den Bauraum eines Fahrzeugs von Vorteil ist.

Es wurde gefunden, dass die Erstreckung wenigstens eines Teils (Mittelteil, erstes Seitenteil und/oder zweites Seitenteil) des Trägers in den Behälter hinein dazu führt, dass der Formprozess dieses Teils aufwendiger wird. Im Gegenzug entfallen hierdurch jedoch Montagearbeiten. Ganz besonders liegt dabei der Erfindung die Erkenntnis zugrunde, dass der eingesparte Aufwand in der Montage größer ist als der beim Formprozess zusätzlich anfallende Aufwand. Im Ergebnis wurde die eingangs genannte Aufgabe gelöst.

Der Begriff "Fluidkomponente" meint bevorzugt Komponenten, die der Führung und/oder der Beeinflussung von Fluiden dienen, worunter beispielsweise Pumpen, Wärmetauscher und/oder Ventile und dergleichen fallen. Der Ausdruck "Aufnahme" meint vorzugsweise eine für eine bestimmte Fluidkomponente vorgesehene Stelle auf dem Träger, wobei die vorgesehene Stelle vorzugsweise wenigstens einen fluidischen Anschluss und/oder wenigstens einen mechanischen Anschluss für die Fluidkomponente bereitstellt.

Das Mittelteil ist bevorzugt wenigstens abschnittsweise zwischen dem ersten Seitenteil und dem zweiten Seitenteil angeordnet. Das Mittelteil, das erste Seitenteil und das zweite Seitenteil bilden vorzugsweise einen Grundkörper. Zweckmäßigerweise umfasst das Mittelteil und/oder das erste Seitenteil und/oder das zweite Seitenteil einen Kunststoff. Besonders vorzugsweise ist das Mittelteil mit dem ersten Seitenteil und/oder mit dem zweiten Seitenteil - vorzugsweise stoffschlüssig und insbesondere mittels Schweißung und besonders vorzugsweise eine durch Blasformen erzeugte Schweißung - verbunden.

Es ist vorteilhaft, dass das Modul bzw. der Träger wenigstens einen Verbinder und vorzugsweise mehrere Verbinder umfasst. Der bzw. die Verbinder ist/sind vorzugsweise als Steckerelement(e) und insbesondere als männliche(s) Steckelement(e) ausgebildet. Die Geometrie des Verbinders bzw. der Verbinder entspricht mit Vorteil einer Norm und insbesondere einer VDA-Norm. Es ist bevorzugt, dass der bzw. die Verbinder mit dem Grundkörper bzw. dem Mittelteil bzw. dem ersten Seitenteil bzw. dem zweiten Seitenteil - vorzugsweise stoffschlüssig und insbesondere mittels Schweißen - verbunden ist/sind.

Gemäß einer sehr bevorzugten Ausführungsform ist das Mittelteil einstückig und vorzugsweise integral ausgebildet. Das Mittelteil wird/ist vorzugsweise mittels Spritzguss hergestellt. Dies bewirkt, dass eine große Anzahl an Strukturen in einem einzigen Spritzgussschritt in dem Mittelteil realisiert werden, was den Herstellungsaufwand gering hält. Der Spritzguss führt dazu, dass die beiden Seiten des Mittelteils unabhängig voneinander strukturiert werden können. Insbesondere erfordert der Spritzguss nicht, dass eine erste Seite des spritzgegossenen Elements einer von der ersten Seite abgewandten zweiten Seite des hergestellten Elements folgt, wie dies beim Blasformen oder Rotationsformen der Fall ist. Das Modul kann einen metallischen Körper umfassen. Es ist möglich, dass der metallische Körper in das - vorzugsweise spritzgegossene - Mittelteil eingebettet ist. Der metallische Körper kann beispielsweise einer Wärmetauschfunktion dienen.

Es ist sehr von Vorteil, dass das Mittelteil flächig ausgebildet ist und eine erste Seitenfläche sowie eine zweite Seitenfläche aufweist. Vorzugsweise umfasst das Mittelteil mehrere Stirnseiten. Die Stirnseiten bilden vorzugsweise einen geschlossenen Umlauf, welcher die erste Seitenfläche und die zweite Seitenfläche definiert. Es ist bevorzugt, dass die erste Seitenfläche dazu vorgesehen ist, dem Wärmetauscher zugewandt zu sein. Es ist bevorzugt, dass die zweite Seitenfläche des Mittelteils dazu vorgesehen ist, einer/der Pumpe zugewandt zu sein. Es ist bevorzugt, dass die erste Seitenfläche dem ersten Seitenteil zugewandt ist bzw. mit dem ersten Seitenteil - insbesondere stoffschlüssig und vorzugsweise mittels, vorzugsweise durch Blasformen erzeugte, Schweißung - verbunden ist. Vorzugsweise ist die zweite Seitenfläche des Mittelteils dem zweiten Seitenteil zugewandt und vorzugsweise mit dem zweiten Seitenteil - insbesondere stoffschlüssig und vorzugsweise mittels, vorzugsweise durch Blasformen erzeugte, Schweißung - verbunden. Es ist sehr bevorzugt, dass das erste Seitenteil und das zweite Seitenteil wenigstens abschnittsweise aneinander anliegen und vorzugsweise miteinander - insbesondere stoffschlüssig und vorzugsweise mittels, vorzugsweise durch Blasformen erzeugte, Schweißung - verbunden sind. Es ist möglich, dass das Mittelteil Ausnahmen, vorzugsweise an einem Rand des Mittelteils befindliche Ausnahmen, aufweist, welche vorzugsweise einen direkten Kontakt des ersten Seitenteils und des zweiten Seitenteils ermöglichen.

Vorteilhafterweise umfasst das Mittelteil bzw. die erste Seitenfläche bzw. die zweite Seitenfläche des Mittelteils wenigstens eine Kanalkontur. Die wenigstens eine Kanalkontur ist vorzugsweise als gegenüber der ersten Seitenfläche bzw. zweiten Seitenfläche vorspringende Kante bzw. Schweißnaht ausgebildet. Die wenigstens eine Kanalkontur bzw. vorspringende Kante dient dem Aufschmelzen und stoffschlüssigen Verbinden mit dem ersten Seitenteil bzw. zweiten Seitenteil. Nach dem Aufschmelzen bzw. Blasformen kann - zweckmäßigerweise im Querschnitt der Kanalkontur gesehen - wenigstens ein Teil der vorspringenden Kante in eine Schweißnaht umgewandelt sein.

Besonders vorzugsweise ist/sind das erste Seitenteil und/oder das zweite Seitenteil einstückig und vorzugsweise integral ausgebildet. Es ist vorteilhaft, dass das erste Seitenteil und/oder das zweite Seitenteil - insbesondere gleichzeitig - mittels Blasformen hergestellt ist/sind. Dies bewirkt eine besonders aufwandsarme Herstellung eines Seitenteils bzw. der Seitenteile. Denn die Seitenteile können so konstruiert werden, dass sie im Wesentlichen jeweils einer - komplexen - Schale entsprechen, bei welcher die Innenoberfläche im Wesentlichen der Außenoberfläche folgt, wobei die Außenoberfläche ihrerseits von dem Formwerkzeug vorgegeben wird.

Es ist sehr bevorzugt, dass das erste Seitenteil und/oder das zweite Seitenteil sich bis in den Behälter erstreckt bzw. erstrecken. Vorzugsweise bildet das erste Seitenteil und/oder das zweite Seitenteil (jeweils) wenigstens einen Teil des Behälters bzw. der Behälterwand. Mit Vorteil erstreckt sich das erste Seitenteil und/oder das zweite Seitenteil bis zu einer Aussparung für eine Einfüllöffnung bzw. für einen/den Einfüllstutzen bzw. bis zu einer Einfüllöffnung. Es ist besonders von Vorteil, wenn das erste Seitenteil und das zweite Seitenteil das Mittelteil wenigstens teilweise in einem Abschnitt des Behälters umschließen. Es ist besonders bevorzugt, dass das erste Seitenteil und das zweite Seitenteil ein/das Innenelement des Behälters wenigstens teilweise umschließen. Es ist bevorzugt, dass das erste Seitenteil eine erste Behälterschale bildet. Mit Vorteil bildet das zweite Seitenteil eine zweite Behälterschale. Die erste Behälterschale und die zweite Behälterschale bilden bevorzugt wenigstens einen Teil der Behälterwand aus.

Es ist vorteilhaft, dass das erste Seitenteil und/oder das zweite Seitenteil wenigstens einen Kanal und/oder wenigstens eine Aufnahme wenigstens teilweise ausbildet/ausbilden. Zweckmäßigerweise bilden das erste Seitenteil und das Mittelteil gemeinsam wenigstens einen Kanal und/oder wenigstens eine Aufnahme aus, welche der ersten Seite des Moduls zugeordnet ist. Mit Vorteil bilden das zweite Seitenteil und das Mittelteil wenigstens einen Kanal und/oder wenigstens eine Aufnahme aus, welcher/welche der zweiten Seite des Moduls zugeordnet ist. Es ist besonders bevorzugt, dass ein Abschnitt der Behälterwand der ersten Seite des Moduls bzw. die erste Behälterschale einstückig und vorzugsweise integral mit einem Abschnitt bzw. einer Aufnahme bzw. eines Kanals des ersten Seitenteils des Trägers verbunden ist. Es ist besonders bevorzugt, dass ein Abschnitt der Behälterwand der zweiten Seite des Moduls bzw. die zweite Behälterschale einstückig und vorzugsweise integral mit einem Abschnitt bzw. einer Aufnahme bzw. eines Kanals des ersten Seitenteils des Trägers verbunden ist.

Es ist besonders bevorzugt, dass das Mittelteil wenigstens einen Abschnitt eines/des Innenelements des Behälters umfasst. Dies bewirkt, dass die Komplexität der Elemente auf das Mittelteil konzentriert wird, sodass mit einem einzigen Spritzguss sämtliche Funktionen des Innenelements sowie des Mittelteils des Trägers in einem Element zusammengefasst werden. Dies erlaubt letztlich eine robuste und vor allem kompakte Ausgestaltung des Moduls. Das Innenelement wird mit Vorteil wenigstens teilweise von der Behälterwand bzw. der ersten Behälterschale bzw. der zweiten Behälterschale wenigstens teilweise umschlossen. Es ist bevorzugt, dass das Innenelement in dem Behälterlumen angeordnet ist. Vorzugsweise umfasst das Mittelteil - insbesondere im Bereich des Trägers - wenigstens eine Struktur zur Bildung eines Kanals und/oder einer Aufnahme. Es ist besonders bevorzugt, dass das Innenelement des Behälters einstückig und vorzugsweise integral mit einem/dem Mittelteil des Trägers verbunden ist.

Vorteilhafterweise umfasst das Mittelteil wenigstens einen Teil einer Aufnahme und/oder wenigstens einen Querschnittsanteil eines Kanals. Es ist sehr bevorzugt, dass das Mittelteil wenigstens eine Kanalkontur aufweist. Die Kanalkontur ist vorzugsweise als gegenüber einer Fläche bzw. der ersten Seitenfläche und/oder der zweiten Seitenfläche des Mittelteils vorspringende Kante bzw. Schweißnaht ausgebildet. Die Kanalkontur ist vorzugsweise so ausgebildet, dass das Mittelteil bei einem Zusammenfügen mit dem ersten Seitenteil und/oder dem zweiten Seitenteil einen Kanal ausbildet. Die Kanalkontur ist vorzugsweise so ausgestaltet, dass diese - vorzugsweise während eines Blasformens des ersten Seitenteils und/oder zweiten Seitenteils - angeschmolzen wird und durch ein Zusammenfügen mit dem ersten Seitenteil und/oder dem zweiten Seitenteil eine stoffschlüssige Verbindung und insbesondere eine Schweißnaht ausbildet.

Es ist sehr bevorzugt, dass das Mittelteil auf der ersten Seite und/oder zweiten Seite eine Behälterbodenkontur aufweist. Die Behälterbodenkontur kann als gegenüber einer Fläche bzw. der ersten Seitenfläche und/oder der zweiten Seitenfläche des Mittelteils vorspringende Kante bzw. Schweißnaht ausgebildet sein. Die Behälterbodenkontur ist vorzugsweise ausgebildet, bei einem Schweißvorgang - und insbesondere bei einem Blasformen des ersten Seitenteils und/oder zweiten Seitenteils - eine Schweißnaht auszubilden. Es ist bevorzugt, dass das erste Seitenteil und/oder das zweite Seitenteil mit dem Mittelteil an der Stelle der Behälterbodenkontur der ersten Seitenfläche bzw. zweiten Seitenfläche eine stoffschlüssige Verbindung eingehen bzw. eingegangen sind und insbesondere eine Schweißnaht - vorzugsweise aufgrund des Blasformens des ersten Seitenteil und/oder des zweiten Seitenteils - ausbilden.

Die eingangs genannte Aufgabe wird gelöst durch eine Baugruppe für einen Temperiermittelkreislauf, umfassend ein erfindungsgemäßes Modul, wobei wenigstens eine Fluidkomponente auf dem Träger des Moduls angeordnet ist. Dies bewirkt eine Konzentration der Fluidkomponenten auf dem Modul zur einfacheren Wartung bzw. Reparatur und ermöglicht im Ergebnis eine größere Kompaktheit des Moduls.

Die eingangs genannte Aufgabe wird gelöst durch eine Verwendung eines erfindungsgemäßen Behälters bzw. eines erfindungsgemäßen Moduls bzw. einer erfindungsgemäßen Baugruppe für ein elektrisches System und vorzugsweise ein Fahrzeug - insbesondere für ein Elektrofahrzeug - und/oder für eine immobile elektrische Einrichtung, insbesondere für eine Ladestelle, vorzugsweise für eine Antriebsbatterie eines/des Fahrzeugs bzw. Elektrofahrzeugs und/oder für eine leistungselektrische Komponente einer/der immobilen Einrichtung bzw. Ladestelle. Dies bewirkt, dass in dem Fahrzeug bzw. in der immobilen elektrischen Einrichtung aufgrund der Kompaktheit des Moduls bzw. der Baugruppe etwas mehr Raum für andere Komponenten zur Verfügung steht.

Die eingangs genannte Aufgabe wird gelöst durch ein Verfahren zur Herstellung eines Moduls für einen Temperiermittelkreislauf, insbesondere eines erfindungsgemäßen Moduls, wobei das Modul einen Behälter - bevorzugt einen erfindungsgemäßen Behälter - und einen Träger umfasst, wobei das Modul bzw. der Behälter und/oder der Träger ein Mittelteil, ein erstes Seitenteil und ein zweites Seitenteil aufweist, wobei das Mittelteil wenigstens abschnittsweise zwischen dem ersten Seitenteil und dem zweiten Seitenteil angeordnet ist, dadurch gekennzeichnet, dass das erste Seitenteil und/oder das zweite Seitenteil mittels Blasformen hergestellt wird/werden.

Der Erfindung liegt die Erkenntnis zugrunde, dass das Blasformen eine besonders aufwandsarme Herstellung eines Seitenteils bzw. der Seitenteile ermöglicht. Hierdurch wird/werden eine ganze Seitenwand bzw. zwei Seitenwände in einem einzigen Herstellungsprozess erzeugt.

Zweckmäßigerweise umfasst der Behälter eine Behälterwand, wobei die Behälterwand vorzugsweise ein mit dem Temperiermittel befüllbares Behälterlumen einschließt. Bevorzugt weist der Träger wenigstens einen Kanal und/oder wenigstens eine Aufnahme zur Anordnung wenigstens einer Fluidkomponente auf. Mit Vorteil umfasst der Behälter ein Innenelement, wobei das Innenelement vorzugsweise von der Behälterwand wenigstens teilweise umschlossen wird bzw. in dem Behälterlumen angeordnet ist.

Es ist sehr bevorzugt, dass das erste Seitenteil und das zweite Seitenteil gleichzeitig mittels Blasformen bzw. in einem gemeinsamen Blasformwerkzeug hergestellt werden. Dies erlaubt besonders kostengünstige Blasformwerkzeuge, weil mit einem Blasformwerkzeug zwei Teile gleichzeitig geschaffen werden.

Gemäß einer besonders bevorzugten Ausführungsform ist das Mittelteil während des Blasformens des ersten Seitenteils und/oder des zweiten Seitenteils zwischen dem ersten Seitenteil und dem zweiten Seitenteil angeordnet. Hierdurch können die Seitenteile nicht nur aufwandsarm hergestellt werden, sondern das Mittelteil und eines der Seitenteile bzw. die Seitenteile gleichzeitig aneinander angepasst werden.

Besonders vorzugsweise wird das Mittelteil während des Blasformens des ersten Seitenteils und/oder des zweiten Seitenteils mit dem ersten Seitenteil und/oder dem zweiten Seitenteil stoffschlüssig verbunden bzw. verschweißt. Dabei werden die Zeit und auch die Prozesswärme des Blasformens zugleich für die stoffschlüssige Verbindung bzw. Verschweißung der zwei bzw. drei Teile miteinander genutzt. Im Ergebnis entsteht ein robustes, fluiddichtes und aufwandsarm hergestelltes Modul für einen Temperiermittelkreislauf.

Die Erfindung wird nachfolgend anhand eines Ausführungsbeispiels mithilfe von sechs Figuren erläutert. Es zeigen in schematischer Darstellung
- Fig. 1: eine perspektivische Seitenansicht einer ersten Seite eines erfindungsgemäßen Moduls,
- Fig. 2: ein Mittelteil des Moduls aus Fig. 1 in der Perspektive aus Fig. 1,
- Fig. 3: das Modul aus Fig. 1 in einer perspektivischen Seitenansicht einer zweiten Seite des Moduls,
- Fig. 4: das Mittelteil aus Fig. 2 in der Perspektive von Fig. 3,
- Fig. 5: einen Querschnitt durch das Modul der Figuren 1 und 3 mit zwei zueinander, entlang der Linie L versetzten Schnittebenen und
- Fig. 6: eine vergrößerte Darstellung eines Ausschnitt aus Fig. 5.

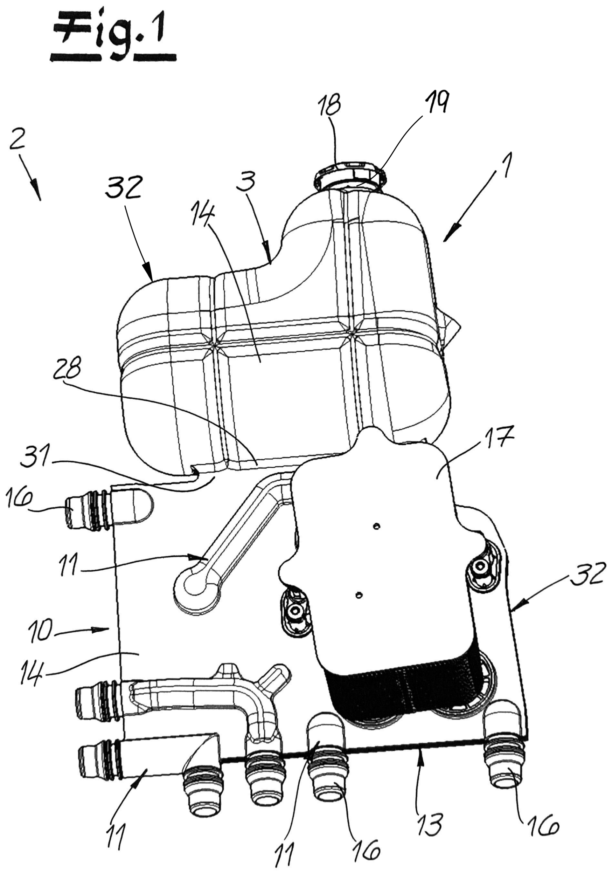

In Fig. 1 ist ein erfindungsgemäßes Modul 2 zur Anordnung von Fluidkomponenten 17, 25 dargestellt. Das Modul 2 umfasst einen Behälter 1 sowie einen Träger 10, wobei auf dem Träger 10 wenigstens eine Fluidkomponente 17, 25 angeordnet werden kann. Eine Fluidkomponente 17, 25 kann ein Wärmetauscher 17 und/oder eine Pumpe 25 und/oder ein hier nicht gezeigtes Ventil sein. Das Modul 2 bildet mit wenigstens einer Fluidkomponente 17, 25 eine Baugruppe.

Das Modul 2 bzw. die Baugruppe 2, 17, 25 dient in diesem Ausführungsbeispiel der Konzentration von Fluidkomponenten 17, 25 zur kompakten Bereitstellung von Fluidkomponenten 17, 25 für einen Temperiermittelkreislauf bzw. ein Temperiermittelsystem eines Fahrzeugs zwecks Temperierung einer Antriebsbatterie. Das Temperiermittelsystem umfasst neben der Baugruppe 2, 17, 25 auch noch Fluidleitungen, welche von der Baugruppe 2, 17, 25 zu einer hier nicht dargestellten Antriebsbatterie und von dort zurück zur Baugruppe 2, 17, 25 führen.

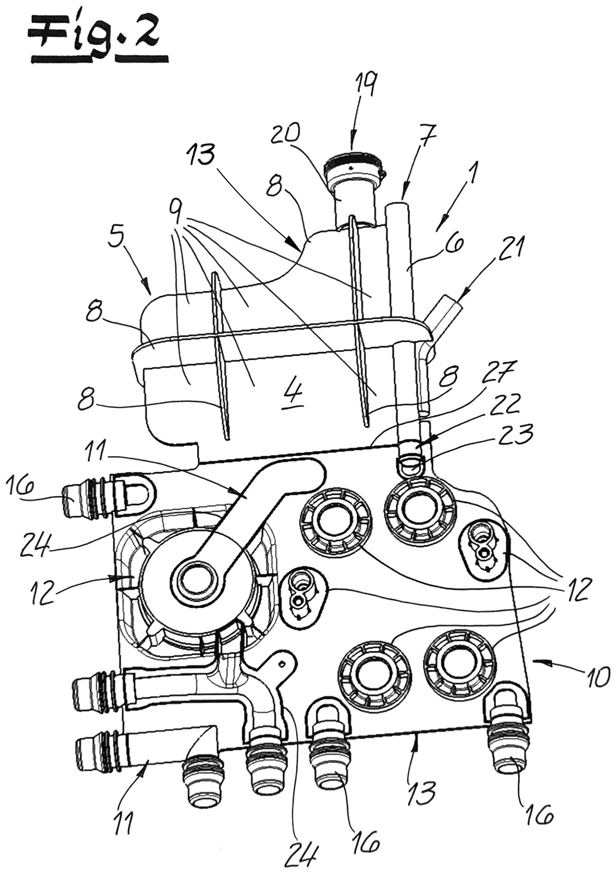

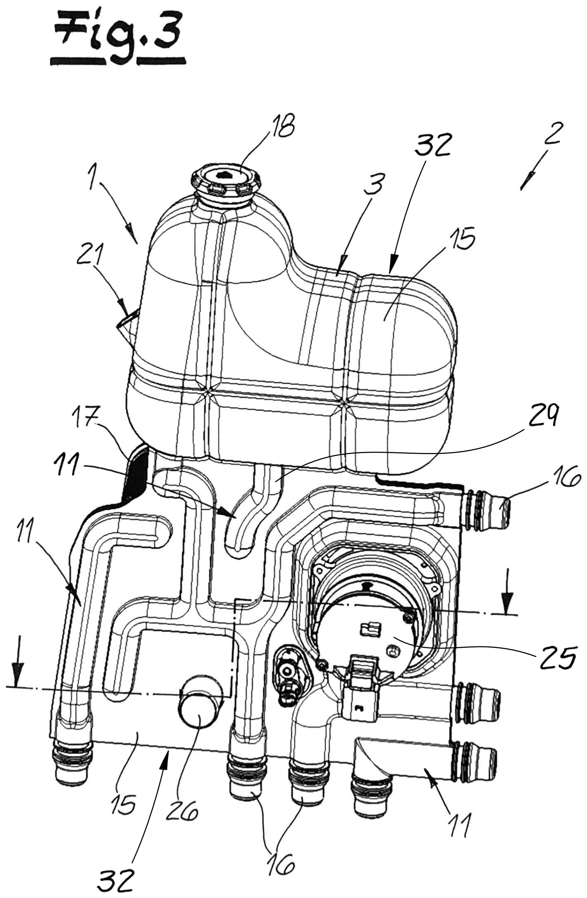

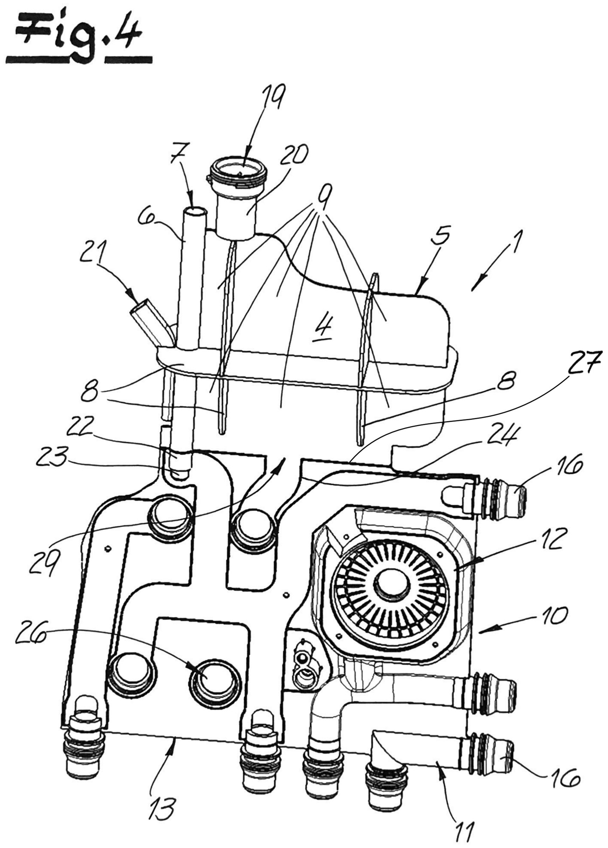

In diesem Ausführungsbeispiel ist der Behälter 1 an dem Träger 10 befestigt. Der Behälter 1 umfasst eine Behälterwand 3 (s. Figuren 1 und 3), welche ein Behälterlumen 4 ausbildet, vgl. Figuren 2 und 4. Die Behälterwand 3 umfasst vorzugsweise eine strukturierte Oberfläche. Der Behälter 1 mag - vorzugsweise in einem oberen Abschnitt - einen Behälterdeckel 18 aufweisen. Der Behälter 1 weist bevorzugt eine Einfüllöffnung 19 auf, welche vorzugsweise mit dem Behälterdeckel 18 - insbesondere reversibel - verschließbar bzw. verschraubbar ist.

Der Behälter 1 umfasst zweckmäßigerweise einen Behälterboden 28, welcher bevorzugt an einem gegenüberliegenden Ende des Behälterdeckels 18 befindlich ist. Vorzugsweise ist der Behälterboden 28 mit einem oberen Abschnitt 31 des Trägers 10 verbunden. Es ist bevorzugt, dass der Träger 10 bzw. der obere Abschnitt 31 des Trägers 10 mit einer Stirnseite an den Behälter 1 bzw. den Behälterboden 28 angeschlossen ist.

Der Träger 10 umfasst wenigstens einen Kanal 11 und wenigstens eine Aufnahme 12, s. Figuren 1 bis 4. Die Aufnahmen 12 dieses Ausführungsbeispiels dienen der mechanischen und fluidischen Verbindung der Fluidkomponenten 17, 25 mit dem Modul 2 bzw. dem Träger 10. Die Kanäle 11 dienen der fluidischen Verbindung der verschiedenen Elemente des Moduls 2 bzw. der Baugruppe 2, 17, 25 und dienen außerdem der fluidischen Verbindung mit externen, hier nicht dargestellten Fluidleitungen.

Es ist bevorzugt, dass die Baugruppe 2, 17, 25 bzw. das Modul 2 bzw. der Träger 10 wenigstens einen Verbinder 16 umfasst. Der Verbinder 16 mag als Stecker bzw. männliches Steckelement ausgebildet sein und/oder der VDA-Norm entsprechen. Es ist sehr bevorzugt, dass der bzw. die Verbinder 16 dieses Ausführungsbeispiels separat mittels Spritzguss hergestellt ist/sind.

Der Träger 10 ist vorzugsweise als flaches Element ausgebildet, sodass er mit Vorteil zwei Seitenflächen sowie mehrere - vorzugsweise vier - Stirnflächen aufweist. Zweckmäßigerweise ist die Oberfläche einer Seitenfläche größer als die Oberfläche einer Stirnfläche und vorzugsweise aller Stirnflächen. Es ist bevorzugt, dass eine Aufnahme 12 für den Wärmetauscher 17 auf einer ersten Seitenfläche des Trägers 10 angeordnet ist. Bevorzugt ist eine Aufnahme 12 für die Pumpe 25 auf einer zweiten Seitenfläche des Trägers 10 befindlich.

Es ist von Vorteil, dass der wenigstens eine Verbinder 16 an einer Stirnfläche und vorzugsweise mehrere der Verbinder 16 an einer der Stirnflächen bzw.an den Stirnflächen angeordnet bzw. angeschweißt ist/sind. Vorzugsweise ist eine der Stirnflächen - insbesondere die oberste Stirnfläche - des Trägers 10 an den Behälter 1 bzw. den Behälterboden 28 angeschlossen.

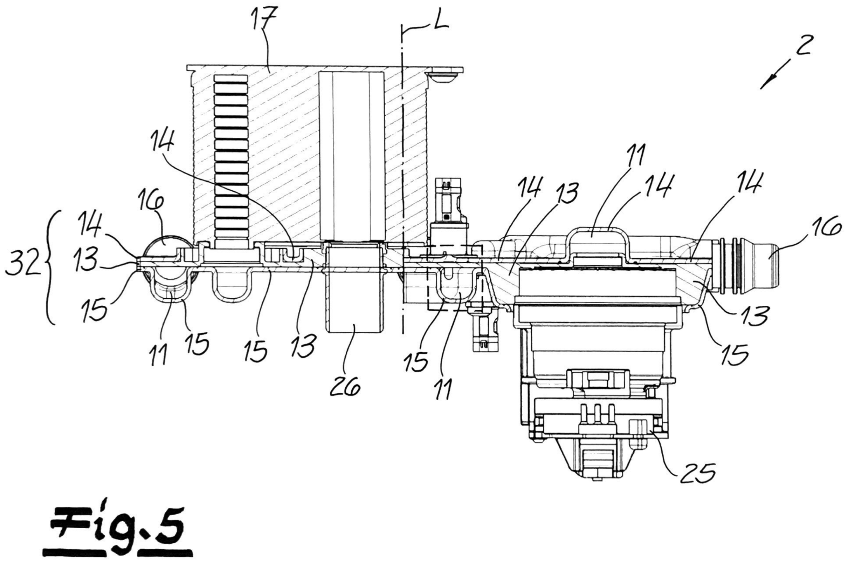

Es ist bevorzugt, dass der Träger 10 einen Grundkörper 32 und den wenigstens einen Verbinder 16 aufweist. Es ist bevorzugt, dass der wenigstens eine Verbinder 16 mit dem Mittelteil 13 bzw. mit dem Grundkörper 32 verschweißt ist. In diesem Ausführungsbeispiel umfasst der Träger 10 bzw. der Grundkörper 32 ein Mittelteil 13, ein erstes Seitenteil 14 und ein zweites Seitenteil 15, vgl. Fig. 5.

In Fig. 1 ist das erste Seitenteil 14 abgebildet. Zweckmäßigerweise umfasst das erste Seitenteil 14 die Aufnahme 12 für die Anordnung des Wärmetauschers 17 auf dem Träger 10 bzw. dem Modul 2. Es ist von besonderem Vorteil, dass das erste Seitenteil 14 sich von dem Träger 10 bis zu einem oberen Ende des Behälters 1 bzw. bis zur Einfüllöffnung 19 erstreckt. Das erste Seitenteil 14 ist vorzugsweise Mittels Blasformen hergestellt.

In Fig. 2 ist die Baugruppe 2, 17, 25 ohne den Wärmetauscher 17 und ohne das erste Seitenteil 14 abgebildet, sodass das Mittelteil 13 des Moduls 2 zum Vorschein kommt. In Fig. 2 ist außerdem auch das zweite Seitenteil 15 ausgeblendet, welches jedoch in Fig. 3 abgebildet ist. Das Mittelteil 13 erstreckt sich vorzugsweise von dem Träger 10 bis zu einem oberen Ende des Behälters 1 bzw. bis zur Einfüllöffnung 19. Das Mittelteil 13 ist mit Vorteil mittels Spritzguss hergestellt.

Das Mittelteil 13 erstreckt sich vorzugsweise in den Behälter 1 bzw. in das Behälterlumen 4 hinein. Mit Vorteil umfasst der Behälter 1 ein Innenelement 5. Der Behälter 1 weist vorzugsweise ein Rohr 6 und/oder wenigstens eine Trennwand 8 und/oder eine Halterung 21 für einen Füllstandssensor auf. Es ist bevorzugt, dass das Innenelement 5 die wenigstens eine Trennwand 8 und/oder den Einfüllstutzen 20 und/oder das Rohr 6 und/oder die Haltung 21 umfasst.

Das Rohr 6 weist bevorzugt ein freies Ende 7 und ein angeschlossenes Ende 22 auf. Vorzugsweise ist das freie Ende 7 des Rohres 6 das obere Ende und das angeschlossene Ende 22 bevorzugt das untere Ende des Rohrs 6. Es ist vorteilhaft, dass das angeschlossene Ende 22 an die Behälterwand 3 bzw. den Behälterboden 28 bzw. den Träger 10 angeschlossen ist. Mit Vorteil umfasst der Träger 10 bzw. das Mittelteil 13 ein Anschlusselement 23 zum Anschluss des angeschlossen Endes 22 des Rohres 6.

In Fig. 3 ist das zweite Seitenteil 15 sowie die Pumpe 25 abgebildet. Das zweite Seitenteil 15 ist vorzugsweise Mittels Blasformen hergestellt. Es ist erkennbar, dass die in Fig. 3 gezeigten Kanäle 11 zum Teil ganz andere Verläufe als die in Fig. 1 gezeigten Kanäle 11 aufweisen. Dies wird über die dreischichtige Struktur des Grundkörpers 32 ermöglicht, welcher aus dem Mittelteil 13, dem ersten Seitenteil 14 und den zweiten Teil 15 zusammengesetzt ist. Hierdurch kann insbesondere der Träger 10 sehr kompakt ausgebildet werden, was für Fahrzeuge von besonderem Vorteil ist. Dem zweiten Seitenteil 15 ist vorzugsweise ein Durchbruch 26 zugeordnet, welcher bevorzugt mit dem Wärmetauscher 17 korrespondiert.

Mit Vorteil umfasst der Behälter 1 eine Behälterbodenkontur 27, s. Fig. 2. Die Behälterbodenkontur 27 mag als Vorsprung bzw. vorstehende Kante ausgebildet sein, sodass die Behälterbodenkontur 27 eine stoffschlüssige Verbindung mit der Behälterwand 3 bzw. dem ersten Seitenteil 14 bzw. dem zweiten Seitenteil 15 erleichtert.

Besonders vorzugsweise werden das Mittelteil 13 und das erste Seitenteil 14 und/oder das zweite Seitenteil 15 mittels Blasformen des ersten Seitenteils 14 und/oder zweiten Seitenteils 15 gleichzeitig miteinander verbunden. Mit Vorteil wird das Mittelteil 13 in einem hier nicht dargestellten Blasformwerkzeug angeordnet. Vorzugsweise werden ein Vorformling des ersten Seitenteils 14 und/oder ein Vorformling des zweiten Seitenteils 15 gemeinsam mit dem Mittelteil 13 in dem Blasformwerkzeug angeordnet. Zweckmäßigerweise wird/werden der Vorformling des ersten Seitenteils 14 und/oder der Vorformling des zweiten Seitenteils 15 erwärmt und aufgeblasen, bis die gewünschte Form erreicht und der Vorformling bzw. die Vorformlinge die Form des ersten Seitenteils 14 bzw. des zweiten Seitenteils 15 angenommen hat/haben. Besonders vorzugsweise wird/werden das Mittelteil 13 bzw. das erste Seitenteil 14 bzw. das zweite Seitenteils 15 so erwärmt und so geformt, dass wenigstens stellenweise und vorzugsweise an der Kanalkontur 24 bzw. der Behälterbodenkontur 27 eine Schweißnaht entsteht bzw. Schweißnähte entstehen. Es ist möglich, dass das Mittelteil 13 eine Kanalkontur 24 oder mehrere Kanalkonturen 24 umfasst, s. Fig. 4.

Das Innenelement 5 dieses Ausführungsbeispiels umfasst vorzugsweise mehrere Trennwände 8, welche bevorzugt senkrecht zueinander stehende Rippen ausbilden. Hierdurch wird die Bewegung des Fluids bzw. Temperiermittels in dem Behälter 1 eingeschränkt, sodass ein Schwappen des Fluids deutlich abnimmt. Die Trennwände 8 bilden innerhalb des Behälters 1 bzw. der Behälterwand 3 zweckmäßigerweise Behälterkammern 9 aus.

Es ist sehr bevorzugt, dass die wenigstens eine Trennwand 8 einstückig bzw. integral mit dem Träger 10 bzw. dem Mittelteil 13 des Trägers 10 verbunden ist. Mit Vorteil ist das Rohr 6 einstückig und vorzugsweise integral mit dem Träger 10 bzw. dem Mittelteil 13 des Trägers 10 verbunden. Es ist bevorzugt, dass der Einfüllstutzen 20 bzw. die Einfüllöffnung 19 einstückig und vorzugsweise integral mit dem Träger 10 bzw. dem Mittelteil 13 des Trägers 10 verbunden ist.

Durch Entfernen des zweiten Seitenteils 15 und gleichzeitiges Weglassen des ersten Seitenteils 14 wird in Fig. 4 die zweite Seite des Mittelteils 13 aus der Perspektive von Fig. 3 erkennbar. Auf der zweiten Seite des Mittelteils 13 ist vorzugsweise eine Behälterbodenkontur 27 zur Verbindung mit dem zweiten Seitenteil 15 angeordnet. Es ist von Vorteil, dass der Behälter 1 einen Behälterauslass 29 umfasst. Der Behälterauslass 29 ist vorzugsweise in einem unteren Bereich des Behälters 1 und insbesondere am Behälterboden 28 angeordnet.

Es ist sehr bevorzugt, dass die Behälterbodenkontur 27 des Mittelteils 13 an einer Stelle zwecks Bildung eines Kanals 11 zur Bereitstellung des Behälterauslasses 29 unterbrochen ist bzw. in eine Kanalkontur 24 übergeht. In Fig. 4 ist insbesondere erkennbar, dass das Rohr 6 bzw. das angeschlossene Ende 22 des Rohrs 6 vorzugsweise mit mehreren Anschlüssen bzw. Verbindern 16 fluidisch verbunden ist. Es ist bevorzugt, dass das Rohr 6 über das angeschlossene Ende 22 mit einem Kanal 11 oder mehreren Kanälen 11 des Trägers 10 fluidisch verbunden ist. In Fig. 4 ist außerdem erkennbar, dass das Mittelteil 13 einen Kanal 11 vollständig ausbilden kann, s. den Kanal 11 rechts unten in Fig. 4 im Vergleich mit Fig. 2.

In Fig. 5 ist ein Querschnitt durch die Baugruppe 2, 17, 25 gezeigt, wobei eine Linie L anzeigt, dass die Schnitte durch den Wärmetauscher 17 und die Pumpe 25 zueinander versetzt sind, vgl. die mit der strichpunktierten Linie symbolisierten Schnitte in Fig. 3. In Fig. 5 ist insbesondere erkennbar, dass das Mittelteil 13, das erste Seitenteil 14 und das zweite Seitenteil 15 den Grundkörper 32 des Trägers 10 bzw. des Behälters 1 bzw. des Moduls 2 bilden. Durch diese dreischichtige Anordnung kann das Modul 2 bzw. der Träger 10 bzw. der Behälter 1 detailreich ausgestaltet werden.

In Fig. 5 ist gezeigt, dass im Falle dieses Ausführungsbeispiels das erste Seitenteil 14 dem Wärmetauscher 17 zugeordnet ist, wohingegen das zweite Seitenteil 15 der Pumpe 25 zugeordnet ist. Sowohl das erste Seitenteil 14 als auch das zweite Seitenteil 15 dieses Ausführungsbeispiels bilden Kanäle 11 aus. Der Durchbruch 26 korrespondiert vorzugsweise mit dem Wärmetauscher 17. Fig. 5 zeigt außerdem hier nicht weiter beschriebene Sensoren bzw. elektronische Elemente, welche zwischen dem Wärmetauscher 17 und der Pumpe 25 angeordnet sind.

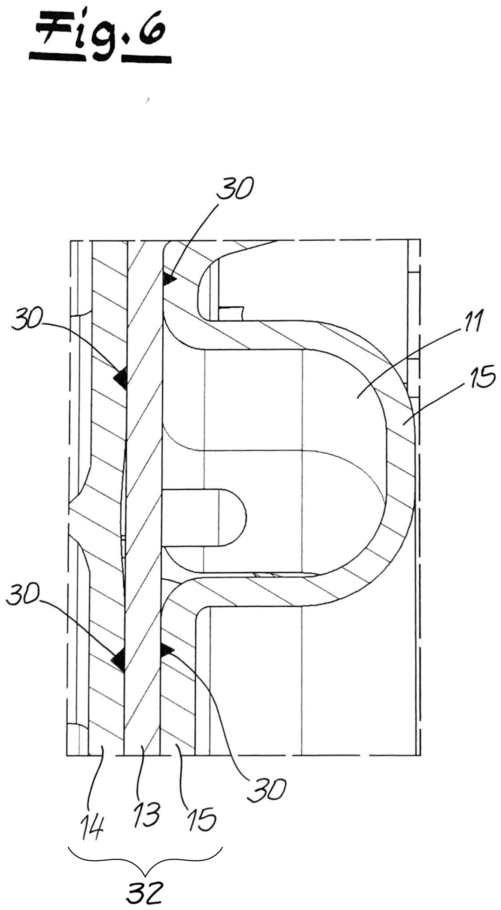

In Fig. 6 ist ein vergrößerter Ausschnitt des Moduls 2 bzw. des Trägers 10 aus Fig. 5 abgebildet. Zur Abdichtung des durch das zweite Seitenteil 15 und das Mittelteil 13 gebildeten Kanals 11 sind Schweißnähte 30 vorgesehen. Es ist bevorzugt, dass die Schweißnähte 30 der Kanäle 11 durch Aufschmelzen von Kanalkonturen 24 - vorzugsweise bei einem Blasformen - entstehen. In Fig. 6 sind auch das erste Seitenteil 14 und das Mittelteil 13 mittels Schweißnähten 30 verbunden, welche vorzugsweise durch Aufschmelzen von Konturen des Mittelteils 13 mittels Blasformen entstanden sind.

### Bezugszeichenliste

| | | | |
|---|---|---|---|
| 1 | Behälter | 28 | Behälterboden |
| 2 | Modul | 29 | Behälterauslass |
| 3 | Behälterwand | 30 | Schweißnaht |
| 4 | Behälterlumen | 31 | Oberer Abschnitt von 10 |
| 5 | Innenelement | 32 | Grundkörper aus 13, 14, 15 |
| 6 | Rohr | | |
| 7 | Freies Ende von 6 | | |
| 8 | Trennwand | | |
| 9 | Behälterkammer | | |
| 10 | Träger | | |
| 11 | Kanal | | |
| 12 | Aufnahme | | |
| 13 | Mittelteil | | |
| 14 | Erstes Seitenteil | | |
| 15 | Zweites Seitenteil | | |
| 16 | Verbinder | | |
| 17 | Wärmetauscher | | |
| 18 | Behälterdeckel | | |
| 19 | Einfüllöffnung | | |
| 20 | Einfüllstutzen | | |
| 21 | Halterung für Füllstandssensor | | |
| 22 | Angeschlossenes Ende von 6 | | |
| 23 | Anschlusselement von 10 für 6 | | |
| 24 | Kanalkontur | | |
| 25 | Pumpe | | |
| 26 | Durchbruch | | |
| 27 | Behälterbodenkontur von 13 | | |

## Patentansprüche

1. Behälter (1) für ein Modul (2) eines Temperiermittelkreislaufs, wobei der Behälter (1) eine Behälterwand (3) aufweist, wobei die Behälterwand (3) ein mit dem Temperiermittel befüllbares Behälterlumen (4) einschließt,
**dadurch gekennzeichnet, dass**
der Behälter (1) ein Innenelement (5) aufweist, wobei das Innenelement (5) von der Behälterwand (3) wenigstens teilweise umschlossen wird bzw. in dem Behälterlumen (4) angeordnet ist.

2. Behälter (1) nach Anspruch 1, wobei das Innenelement (5) ein Rohr (6) umfasst, wobei vorzugsweise das Rohr (6) ein freies Ende (7) aufweist, wobei bevorzugt ist, dass das freie Ende (7) des Rohrs (6) in die zwei oberen Drittel bzw. in die obere Hälfte bzw. in das obere Drittel des Behälterlumens (4) mündet.

3. Behälter (1) nach Anspruch 1 oder 2, wobei das Innenelement (5) bzw. der Behälter (1) wenigstens eine Trennwand (8) aufweist, wobei die Trennwand (8) das Behälterlumen (4) in wenigstens zwei Behälterkammern (9) unterteilt, wobei die Behälterkammern (9) vorzugsweise fluidisch miteinander verbunden sind.

4. Modul (2) für einen Temperiermittelkreislauf, wobei das Modul (2) einen Behälter (1) - insbesondere einen Behälter (1) nach einem der Ansprüche 1 bis 3 - und einen Träger (10) umfasst, wobei der Behälter (1) eine Behälterwand (3) aufweist, wobei die Behälterwand (3) ein mit dem Temperiermittel befüllbares Behälterlumen (4) einschließt,
wobei der Träger (10) wenigstens einen Kanal (11) und vorzugsweise mehrere Kanäle (11) aufweist, wobei der Träger (10) wenigstens eine Aufnahme (12) zur Anordnung wenigstens einer Fluidkomponente (17, 25) umfasst, wobei der Träger (10) ein Mittelteil (13), ein erstes Seitenteil (14) und ein zweites Seitenteil (15) aufweist,
**dadurch gekennzeichnet, dass**
der Behälter (1) das Mittelteil (13), das erste Seitenteil (14) und/oder das zweite Seitenteil (15) umfasst.

5. Modul (2) nach einem der Ansprüche 1 bis 4, wobei das Mittelteil (13) einstückig und vorzugsweise integral ausgebildet ist, wobei das Mittelteil (13) vorzugsweise mittels Spritzguss hergestellt ist.

6. Modul (2) nach einem der Ansprüche 1 bis 5, wobei das erste Seitenteil (14) und/oder das zweite Seitenteil (15) einstückig und vorzugsweise integral ausgebildet ist/sind, wobei das erste Seitenteil (14) und/oder das zweite Seitenteil (15) vorzugsweise mittels Blasformen hergestellt ist/sind.

7. Modul (2) nach einem der Ansprüche 1 bis 6, wobei das Mittelteil (13) wenigstens einen Abschnitt eines/des Innenelements (5) des Behälters (1) umfasst und/oder wenigstens einen Teil einer Aufnahme (12) und/oder wenigstens einen Querschnittsanteil eines Kanals (11) aufweist.

8. Baugruppe (2, 17, 25) für einen Temperiermittelkreislauf, umfassend ein Modul (2) nach einem der Ansprüche 4 bis 7, wobei wenigstens eine Fluidkomponente (17, 25) auf dem Träger (10) des Moduls (2) angeordnet ist.

9. Verwendung eines Behälters (1) nach einem der Ansprüche 1 bis 3, bzw.
eines Moduls (2) gemäß einem der Ansprüche 4 bis 7 bzw. einer Baugruppe (2, 17, 25) nach Anspruch 8 für ein elektrisches System und vorzugsweise für ein Fahrzeug - insbesondere für ein Elektrofahrzeug - oder für eine immobile elektrische Einrichtung, insbesondere für eine Ladestelle, vorzugsweise für eine Antriebsbatterie eines/des Fahrzeugs oder für eine leistungselektrische Komponente der immobilen Einrichtung bzw. Ladestelle.

10. Verfahren zur Herstellung eines Moduls (2) für einen Temperiermittelkreislauf, insbesondere eines Moduls (2) nach einem der Ansprüche 4 bis 7, wobei das Modul (2) einen Behälter (1) - bevorzugt einen Behälter (1) nach einem der Ansprüche 1 bis 3 - und einen Träger (10) umfasst,
wobei das Modul (2) bzw. der Behälter (1) und/oder der Träger (10) ein Mittelteil (13), ein erstes Seitenteil (14) und ein zweites Seitenteil (15) aufweist, wobei das Mittelteil (13) wenigstens abschnittsweise zwischen dem ersten Seitenteil (14) und dem zweiten Seitenteil (15) angeordnet ist,
**dadurch gekennzeichnet, dass**
das erste Seitenteil (14) und/oder das zweite Seitenteil (15) mittels Blasformen hergestellt wird/werden.

11. Verfahren nach Anspruch 10, wobei das Mittelteil (13) während des Blasformens des ersten Seitenteils (14) und/oder des zweiten Seitenteils (15) zwischen dem ersten Seitenteil (14) und dem zweiten Seitenteil (15) angeordnet ist.

12. Verfahren nach Anspruch 10 oder 11, wobei das Mittelteil (13) während des Blasformens des ersten Seitenteils (14) und/oder des zweiten Seitenteils (15) mit dem ersten Seitenteil (14) und/oder dem zweiten Seitenteil (15) stoffschlüssig verbunden bzw. verschweißt wird.
